# EUROPEAN PATENT APPLICATION

(11) **EP 4 733 425 A1**
(43) Date of publication of application: **29.04.2026**
(21) Application number: 25000104.7
(22) Date of filing: 13.10.2025
(51) Int. Cl.: C22C 13/02, F16C 17/02, F16C 33/12, B22D 21/00, B22D 27/08

(54) **METHOD OF REFINING HARD PHASES IN THE MATRIX OF A TIN-BASED BEARING ALLOY**

(30) Priority: 24.10.2024 PL 45013424
(71) Applicant: Siec Badawcza Lukasiewicz - Instytut Metali Niezelaznych, 44-100 Gliwice (PL)
(72) Inventor: Maleta, Marcin, 34-120 ANDRYCHÓW (PL); Brudny, Anna, 34-120 ANDRYCHÓW (PL); Cwolek, Beata, 44-117 GLIWICE (PL)

(57) **Abstract**

The method for refining hard phases from the Sb-Sn system in a tin-based bearing alloy matrix by melting and holding at temperature is characterised by the fact that the Sn based alloy with an Sb content in the range of 10 to 12 wt. % and Cu in the range of 5.5 to 6.5 wt. % is heated to a temperature in the range of 500°C to 550°C and then subjected to ultrasonic vibration at a frequency of 35-40 kHz from the moment the ingot mould is filled with liquid alloy until solidification, during which the filled mould is heated to a maximum temperature in the range of 85°C to 100°C at a rate of 3.6°C/s to 4.5°C/s, after reaching the maximum temperature, the ingot mould is cooled with water to a temperature of 25-30°C at a rate of 0.70°C/s to 0.75°C/s.

## Description

The subject of this invention is a method for refining hard phases from the Sb-Sn system in a tin-based bearing alloy matrix.

Patent PL237579 describes a tin-based bearing alloy containing 10-12% Sb, 5-7% Cu by weight, characterized by 0.1-0.5% Mn and 0.05-0.2% Ca and/or Mg and/or Sr, and 0.05-0.2% Ce and/or La, with the rest being Sn. The elements in the alloy are selected in terms of quantity, properties, and mutual reactions so as not to pose a hazard to humans and the environment. Due to its high sliding and functional properties, this alloy can be used to produce sliding bearings, especially in centrifugal and die-casting technologies, and other elements requiring adequate abrasion resistance, a low coefficient of friction, and lack of toxicity.

Patent PL219677 describes a method of heat treatment of tin babbitt alloys, consisting in pouring the bearing alloy onto a structural element or a shaped piece, or pouring the bearing alloy onto a sliding bearing shell, which is characterized in that the previously prepared structural elements or shaped pieces with the bearing alloy applied undergo heating in a furnace chamber to a temperature of 140-160 °C at a rate of 15°/min and isothermal holding at a temperature of 140-160°C for 2 hours, after which the structural elements or shaped pieces are cooled in the furnace or in the air to ambient temperature. This solution allows for the production of improved tin babbits, characterised by over 15% higher hardness compared to the source material and 7% higher bending strength. An additional advantage of the solution is a twofold reduction in mass loss during a dry abrasion resistance test conducted under the same conditions, while maintaining the same coefficient of friction. A further advantage of this solution is that the annealing process occurring during heat treatment causes the refinement of SnSb and CuSn precipitates, which is unexpectedly beneficial in this type of alloys from the perspective of their functional properties.

Also known from patent CN110819847A is a tin-based alloy with a high antimony content containing the following elements in the following weight percentages: 10-12% antimony, 5-7% copper, 0.003-0.01% tellurium, 0.01-0.015% germanium, and the rest - tin, as well as a method for its preparation. The solution provides a high-antimony tin alloy and a method for its preparation with improved alloying element ratios that enhance its strength and mechanical properties. The developed preparation method increases alloy production efficiency by removing various impurities, improvement of the alloy quality, and reducing defects such as bubbles and cracks.

Another patent, CN111549256A, describes a method for improving the properties of a Sn-based babbitt alloy using plasma spraying by adding metallic cobalt (Co) and tungsten carbide (WC) to the alloy matrix applied to brass surfaces. The added amounts of tungsten carbide (WC) range from 4% and 8%, and the added amounts of metallic cobalt (Co) range from 8% to 20%, and the sprayed brass is subjected to an abrasion test. The developed method allows for improving the strength of the connection between the bearing shell and the base, reducing the coefficient of friction, and increasing the tribological performance of the bearing shell, as well as increasing its microhardness, which can effectively solve the problem of bearing shell detachment.

The above solutions allow for changes in the properties of bearing alloys, which take into account modifications in chemical composition and microstructure by introducing metallic and composite particles into the matrix, as well as by heat treatment. The refinement and increased dispersion of hard phases from the Cu-Sn and Sb-Sn systems in the bearing alloy matrix allows for an increase in its mechanical properties. The method developed in this invention allows for the refinement of hard phases from the Sb-Sn system during the casting process of an Sn based bearing alloy with an Sb content in the range of 10 to 12% by weight and Cu in the range of 5.5 to 6.5% by weight by using high-frequency ultrasonic vibration and high heat removal rate during the solidification process. The advantage of this invention is the possibility of producing components for sliding applications and bearing shells with increased mechanical properties while maintaining high tribological properties and lower abrasive wear in the die casting process.

The essence of the present invention is a method of refining hard phases in the matrix of a tin-based bearing alloy by melting and heating, characterized in that the Sn-based alloy with an Sb content in the range of 10 to 12% by mass and Cu in the range of 5.5 to 6.5% by mass is heated to a temperature ranging from 500°C to 550°C and then subjected to ultrasonic vibrations at a frequency of 35-40 kHz from the moment the ingot mould is filled with the liquid alloy until solidification. During solidification, the filled ingot mould heats up to a maximum temperature ranging from 85°C to 100°C at a rate of 3.6°C/s to 4.5°C/s. After reaching the maximum temperature, the ingot mould is cooled with water to a temperature of 25-30°C at a rate of 0.70°C/s to 0.75°C/s.

The invention is disclosed in the following example embodiment.

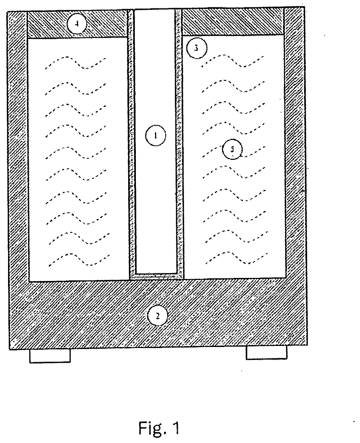

The station for production of the alloy is shown in Figure 1. The inner walls of the brass ingot mould 1 made of a CuZn30 alloy with a circular cross-section are coated with a solution of soot in kerosene. After applying the soot layer, the ingot mould 1 is heated with a gas burner flame and then left to cool. Cooling of the mould 1 is carried out in air or under a water stream until its outer surface temperature reaches 20 to 30°C. The temperature of the mould 1 is monitored using a contact thermocouple sensor. The cooled mould 1 is placed in chamber 3 of an ultrasonic cleaner 2 filled with water at a temperature of 20 to 25°C and stabilized using a flanged ceramic plate 4. Sn-Sb-Cu bearing alloy with 11% wt. of Sb content and 6% wt. of Cu, with the rest being Sn, is melted and heated to 500°C in an open induction furnace in a graphite crucible without a protective coating. Once the desired temperature is reached, the liquid alloy is stirred with a preheated graphite rod, and the oxide layer is then removed from the surface of the liquid bath using a preheated graphite spoon. After checking the bath temperature with a contact thermocouple sensor, ultrasonic vibrations 5 with a frequency of 35 kHz are activated in the washer, and then the liquid alloy is poured into a brass ingot mould placed in chamber 3 of washer 2. During solidification, the filled ingot mould 1 heats up to a maximum temperature of 85°C at a rate of 3.6°C/s, and after reaching the maximum temperature, it is cooled by water in chamber 3 of washer 2 to a temperature of 30°C at a rate of 0.75°C/s. By using the ultrasound and rapid heat removal during the crystallization of the liquid alloy in the filled ingot mould 1 placed in the chamber 3 of the ultrasonic washer 2 filled with water, the produced rods are characterized by a microstructure with a larger amount of the Sb-Sn phase of smaller size (reduction of the average surface area of the phase particles by 17%), which results in an increase in the microhardness and hardness values by more than 10% to the level of 30HV1 and 26.1HBW2.5/15.625/9, as well as in a reduction of the sample mass loss by 38% in the dry abrasion test while maintaining a similar level of the coefficient of friction in comparison to rods normally cast into a brass ingot mould heated to a temperature of 170°C.

## Claims

1. The method for refining hard phases from the Sb-Sn system in a tin-based bearing alloy matrix by melting and holding at temperature, **characterised in that** the Sn based alloy with an Sb content in the range of 10 to 12 wt. % and Cu in the range of 5.5 to 6.5 wt. % is heated to a temperature in the range of 500°C to 550°C and then subjected to ultrasonic vibration at a frequency of 35-40 kHz from the moment the ingot mould is filled with liquid alloy until solidification, during which the filled mould is heated to a maximum temperature in the range of 85°C to 100°C at a rate of 3.6°C/s to 4.5°C/s, after reaching the maximum temperature, the ingot mould is cooled with water to a temperature of 25-30°C at a rate of 0.70°C/s to 0.75°C/s.
